(19) Europäisches Patentamt
European Patent Office
Office européen des brevets

(11) **EP 2 595 107 A1**

(12) **EUROPEAN PATENT APPLICATION**

(43) Date of publication:
**22.05.2013  Bulletin 2013/21**

(51) Int Cl.:
***G06Q 30/00*** *(2012.01)*     ***G06Q 10/00*** *(2012.01)*

(21) Application number: **11306492.7**

(22) Date of filing: **15.11.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Thireau, Jean-Sebastien**<br>**06130 Grasse (FR)**<br>• **Burge, Eric**<br>**06510 Gattières (FR)** |
| (71) Applicant: **Amadeus S.A.S.**<br>**06902 Sophia Antipolis (FR)** | (74) Representative: **Anderson, Angela Mary**<br>**Murgitroyd & Company**<br>**Immeuble Atlantis**<br>**55, Allée Pierre Ziller**<br>**Sophia Antipolis**<br>**06560 Valbonne (FR)** |
| (72) Inventors:<br>• **Lavecchia, Claudio**<br>**06600 Antibes (FR)** | |

(54) **Method and system for generating and using a price summary**

(57)     A system for managing pricing proposals and associated options in the travel industry with respect to the provision of travel services or products, wherein the system is capable of communicating with a booking engine and a global distribution system (GDS), the system being operable by a reservation agent, wherein the system comprises: an itinerary pricing User Interface for determining an itinerary for one or more predetermined passenger, segment and option combinations , sending one or more informative pricing requests to the GDS and receiving as a result of the requests one or more pricing proposals for each predetermined passenger, segment and option combination from the GDS; a pricing summary module and User Interface for storing the one or more pricing proposals for the predetermined passenger, segment and option combination, such that the one or more pricing proposals are available for subsequent use, such as issuing a ticket associated with one or more of the pricing proposals, wherein the pricing summary User Interface provides an intuitive representation of the one or more pricing proposals in order to compare the pricing proposals.

Fig. 3

## Description

Field of the invention

The present invention relates to a method and system for generating and using a price summary, particularly in respect to the travel industry.

Background of the invention

All the major ecommerce portals provide pricing applications that allow a user to add selections to a virtual shopping cart. The total price is then calculated for the products in the shopping cart. The prices of the objects contained in the shopping cart are fixed and as such the price of the shopping cart content is simply calculated as the sum of the prices of the objects in the shopping cart. A pricing strategy (for example the fact that two objects were added to the cart at the same moment) has no bearing on the computation of the total price of the cart content.

Pricing applications for air itineraries allow an end-user to price air segments that have been added to a Passenger Name Record (PNR). The reservation agent decides how to group the passengers and segments when performing a pricing operation. The price for a PNR is determined through several pricing commands and the agent can add pricing options to each command. Existing pricing applications for air itineraries are based on a fully manual and iterative procedure and do not provide automation or convenient comparison capabilities.

Due to the complexity of pricing airline fares, air itinerary pricing is a process which differs from the shopping cart pricing process described above.

The final price of an air itinerary in a PNR (i.e. the final price that the customer will pay when the tickets are issued) may depend on how the segments and passengers are grouped during the pricing process, as well as on the pricing options used. Each group of segments that has been priced together will correspond to a ticket when the ticket or tickets are eventually issued. For example, a two segment itinerary, such as a round trip, can be priced and ticketed using one of at least two pricing strategies. In a first strategy, the outbound and inbound legs may be priced together and the total price is equal to PR1. When the ticket is issued, it is a single ticket covering the whole itinerary. In a second strategy the outbound leg is priced and is equal to PR2. The inbound is priced and is equal to PR3. When the ticket is issued two separate tickets are provided. In general, the total price for two separate legs and a round trip are not the same.

As a result, a pricing method and system aimed at finding the lowest price for a given air itinerary cannot be as simple as that required for ecommerce. The pricing process cannot be reduced to a process of adding items to a shopping cart and calculating a total price as the sum of the prices of the objects in the cart.

The current methodology for pricing air itineraries is also not user friendly or intuitive due to the need to compare different pricing proposals and different pricing strategies for a given itinerary.

Typically, a reservation agent using such an application will perform several different pricing commands. The commands will change the manner in which the agent groups segments, passengers, passenger grouping and pricing options. For each different pricing command the agent will note down the abovementioned options and the results on a piece of paper; and compare them and perform sum operations manually; in order to be able to find the best pricing proposal. It is necessary to note down this information in case the customer decides to proceed to the issuance of a ticket corresponding to the pricing proposal. If this is the case, at present, the agent will have to repeat the set of commands (including the segments and passenger grouping and the pricing options used) in a "confirmed" mode in order to create a pricing record and issue the ticket.

In the travel domain travel agents often receive enquiries from users for a price or proposal for a travel service or product. In response to the request the travel agent conducts a search to find appropriate results as described above. These results are communicated to the user often by telephone and, as previously mentioned, a note of the results is kept by the agent in case the user subsequently wishes the product or service identified by the travel agent to be issued. The manner in which the travel agent keeps a note of the results can vary from person to person. It is often merely a handwritten note kept in a notebook or a Post-it ™ stuck to the computer. It is subsequently difficult, if a user wishes to purchase a particular product or service, to identify the exact result that was earlier identified by the travel agent. In addition, the agent will need to re-play all the pricing commands in order to confirm the pricing proposal that was previously identified and create the pricing record, prior to proceeding to the ticket issuance.

The present systems are very much hit and miss and the agent is required to keep notes and information and then repeat searches once a customer has decided to purchase a particular ticket. If the request for the purchase of the ticket is taken by a different agent from the one who took the first enquiry, the problem may be compounded still further. The second agent will have no information about the nature of the proposals proposed to the customer and will probably be unable to find precisely the same combination as the previous agent. As a result, the customer may not be able to purchase the proposal they were previously offered.

The prior art does not address the problems of keeping information available and accessible for future use the proposal as previously created. In addition, the prior art fails to solve many of the other existing problems.

Objects of the invention

It is an object of the present invention to overcome at least some of the problems associated with the prior art.
It is a further object of the present invention to provide a method and system which allows a travel agent to retain information relating to pricing proposals for subsequent use.

Summary of the invention

The present invention provides a method, system and computer program as set out in the accompanying claims.
According to one aspect of the present invention there is provided a system for managing pricing proposals and associated options in the travel industry with respect to the provision of travel services or products, wherein the system is capable of communicating with a booking engine and a global distribution system (GDS), the system being operable by a reservation agent, wherein the system comprises:

- an itinerary pricing User Interface for determining an itinerary for one or more predetermined passenger, segment and option combinations, sending one or more informative pricing requests to a GDS and receiving as a result of the requests one or more fares for each predetermined passenger, segment and option combination from the GDS;
- a pricing summary module and User Interface for storing the one or more fares and build one or more pricing proposals, so that the one or more pricing proposals are available for subsequent use, such as issuing a ticket associated with one or more of the pricing proposals, wherein the pricing summary User Interface provides an intuitive representation of the one or more pricing proposals in order to compare the pricing proposals.

For the avoidance of doubt Informative pricing refers to a preview of price information which relates to a real price. The real price then can be used if a customer subsequently requests issuance of a ticket.
The term fare as used herein is intended to include a combination of a fare basis and an associated price. The fare basis is a code which is represented by an alphanumeric sequence for identifying a type of fare and the associated price is a numerical value of the cost if a ticket associated with the fare is subsequently issued.
Optionally, the results of the informative itinerary pricing request and input parameters used to generate the informative itinerary pricing request are stored in the pricing summary module.
Optionally, the pricing proposal comprises a set of results of informative pricing results, such as a fare and a set of input parameters that were used to generate each informative pricing result.
Optionally, comparison of the pricing proposals is based on a price criteria or an attribute of the fare composing the pricing proposal.
Optionally, the pricing summary User Interface can be used to trigger the confirmation of the selected pricing proposal via the pricing confirmation module.
Optionally, the system further comprises a pricing confirmation module for confirming, on request, via the pricing summary User Interface, one or more pricing proposal and automatically repeating the steps necessary for creating one or more pricing record needed to issue the ticket corresponding to the one or more pricing proposal.
According to a second aspect of the invention, there is provided a method for managing pricing proposals and associated options in the travel industry with respect to the provision of travel services or products, operating on a system capable of communicating with a booking engine and a global distribution system (GDS), and being operable by a reservation agent, wherein the method comprises:

- determining via an itinerary pricing User Interface an itinerary for one or more predetermined passenger, segment and option combinations from the GDS by sending one or more informative pricing requests to the GDS and receiving as a result of the requests one or more pricing proposals for each predetermined passenger, segment and option combination from the GDS;

- storing via a pricing summary module and User Interface the one or more pricing proposals for each predetermined passenger, segment and option combination, such that the one or more pricing proposals are available for subsequent use, such as issuing a ticket associated with one or more of the pricing proposals, wherein the pricing summary User Interface provides an intuitive representation of the one or more pricing proposals in order to compare the pricing proposals.

Brief description of the drawings

Reference will now be made, by way of example, to the accompanying drawings, in which:

Figure 1 is a diagram for showing the relationship between the travel agent and GDS, in accordance with an embodiment of the invention,

Figure 2 is a sequence diagram of a first part of the process, in accordance with an embodiment of the invention,

Figure 3 is a sequence diagram of the second part of the process, in accordance with an embodiment of the invention, and

Figures 4 to 14 are a variety of screenshots demonstrating various stages of the process, in accordance with an embodiment of the invention.

Detailed description of the preferred embodiments

The present invention relates to a travel pricing process, for any kind of ticket, product or service priced via an automated pricing system (also referred to as the "system" in the rest of this document).

The invention enables a professional reservation agent (airline or travel agent) to compute and/or compare, in a user friendly way, different pricing proposals for the same itinerary in order to determine the most convenient and cost-effective option for the customer. In addition, the invention provides an automated mechanism for conserving pricing information relating to different proposals. This automated process enhances agent productivity and reduces the error risk. In addition, it is easier for an agent to identify the priced proposals and be able to confirm these proposals for the customer. This is particularly the case where a second agent conducts the second part of the process, namely confirming a proposal for a customer that has previously been provided by a first agent.

One of the primary concerns of the present invention is the concept of a pricing summary. In order to more clearly describe the present invention, it is helpful to define certain terms.

A passenger name record (PNR) contains data relating to a number of passengers ($P_i$, $P_j$,...) and a number of air segments ($Sa,Sb,...$). The first required definition is the price of an air itinerary for a given PNR. The price of the air itinerary for the PNR record identified above is a possible price of the air tickets issued to all passengers $P_{i,j,...}$ in the PNR, covering all the air segments ($Sa,Sb,...$).

A second definition is the definition of informative pricing command, this is a command that takes as its input a subset of the passengers and the air segments in the abovementioned PNR. Pricing options are then determined and combined to produce a specific output price, which is applicable just for the combination of passengers and air segments in the initial input for informative purposes.

A third definition is the definition of a pricing proposal. This is the result of one of the possible sets of informative pricing commands that an agent can execute to obtain a price for the air itinerary for the abovementioned PNR. As will be described below, this can be represented graphically.

A fourth definition is the pricing summary definition. The pricing summary is essentially a container of a limited number of different pricing proposals. This container helps the reservation agent to compare and contrast different pricing proposals in order to find the most suitable for the air itinerary in a particular PNR. Further details of the pricing summary will be described in greater detail below.

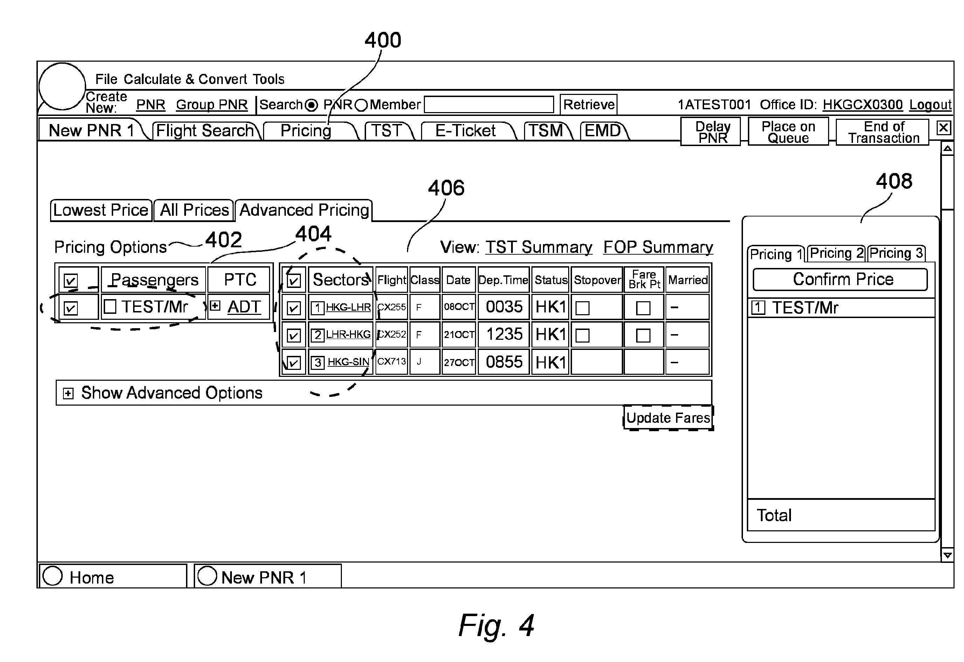

Referring to the drawings, particularly figures 4 to 14, various phases of a pricing scenario are described. The screenshots show the various features of the travel agent tool which forms part of the present invention. The system enables the travel or reservation agent to execute a number of informative pricing commands. Once the agent has received relevant information relating to one or more pricing proposals, which correspond to the results of informative pricing, the pricing proposals are depicted in the three tabs "Pricing 1", "Pricing 2", "Pricing 3" in the pricing summary 408 shown in figure 4. The agent may carry out a number of different informative pricing commands and the information relating to each is stored in the system by means of parameters such as the passenger selection, segment selection, pricing options, etc.

These parameters are shown on the screenshots along with other parameters that may equally be of value in determining and storing information relating to a pricing command. The screenshots will be described in more detail below.

For a particular itinerary the agent can build multiple pricing proposals. Each pricing proposal can be built using different sets of options or grouping the legs of a journey in different ways, or using any other appropriate factor. Each pricing proposal may result in a different combination of fares so that the total price of the air itinerary for the PNR may be different from one proposal to another. The two or more pricing proposals can be stored in the pricing summary. When a pricing proposal is stored, the system will store all the information needed to allow the construction of the pricing proposal itself. This information may include passenger selections, segment selections, pricing options, etc. In addition, when the pricing proposals are added to the pricing summary the agent will be able to compare them easily and choose the best proposal to meet the user's needs.

Prior to ticket issuance, the agent will need to create persistent data in the system which stores the price associated with the ticket that will ultimately be issued. This data is referred to as a pricing record.

When the agent wants to proceed to ticket issuance, a pricing proposal is selected for confirmation. All the informative pricing commands and associated input parameters (segment and passenger selection, pricing options, etc) are replayed in a mode that triggers creation of the pricing records that are necessary to issue the ticket. These pricing records will persist within the system. It should be noted that the informative pricing does not create any persistent data. Should there be any errors these will be reported as either a success or failure of a particular transaction.

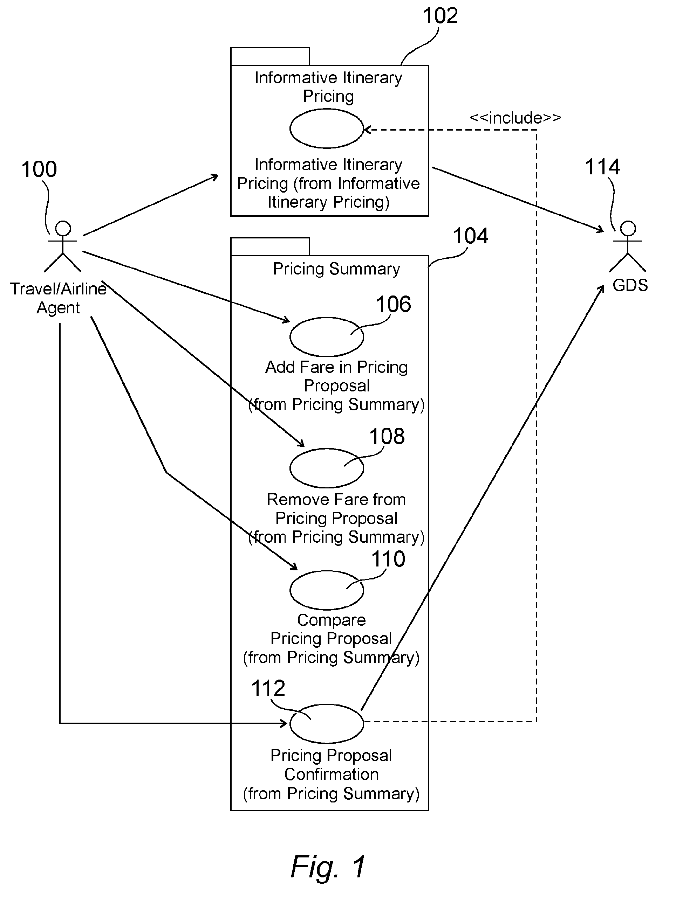

As previously indicated, the invention relates to a system and process for an agent to iterate informative pricing commands and store these commands and their results in a convenient manner in order to retrieve the information later. Figure 1 shows a simple use case flow diagram to illustrate the basic steps and processes carried out. A travel agent 100 has access to the pricing summary system of the present invention, screenshots of which are shown in figures 4 to 14. The pricing summary system includes an informative itinerary pricing module 102 and a pricing summary module 104. The informative itinerary pricing module is in communication with the global distribution system (GDS) and obtains the informative itinerary pricing results for a number of different pricing commands. The pricing summary module 104 adds fares in a pricing proposal 106. In addition, fares can be removed from the pricing proposal 108 and the agent is able to compare pricing proposals 110 in a user friendly environment. At the same time, or in a subsequent step, a pricing proposal confirmation 112 may be carried out by the agent. This causes the system to replay all the pricing commands, using the passenger selections, segment selections, pricing options, etc that have been saved when the pricing proposal was generated. Options may include class, extras etc. When a pricing proposal is confirmed, the system will replay the pricing commands no longer in the informative mode, and a persistent pricing record will be created in the system.

The agent will be able to prepare a plurality of pricing proposals each using different pricing strategies. Different pricing proposals that are associated with different prices for a given PNR may come from a number of different pricing strategies. These strategies include: pricing domestic segments separately from international segments; pricing each airline independently; using specific pricing options, such as Passenger Type Code (PTC) override forcing the fare breakpoint, searching for specific discounts etc; pricing the full itinerary for all passengers; or any other appropriate strategy. An example of a PTC override is using a different PTC than the initial PTC definition for the passenger in the PNR, such as a military adult rather than an adult.

The different pricing proposals, with all their associated data, are added to the pricing summary 104 to be stored and to be available for analysis, comparisons and confirmation. The pricing summary makes comparison of the different pricing strategies much simpler than previous systems and methods. There is no need for the agent to perform any manual calculations and the quality of the service that the agent can provide the customer is increased, due to the fact that the most suitable price for a particular itinerary can be easily identified. In addition, the price that the agent communicates to the customer will be accurate and easily retrievable at a later date for pricing proposal confirmation, as described above.

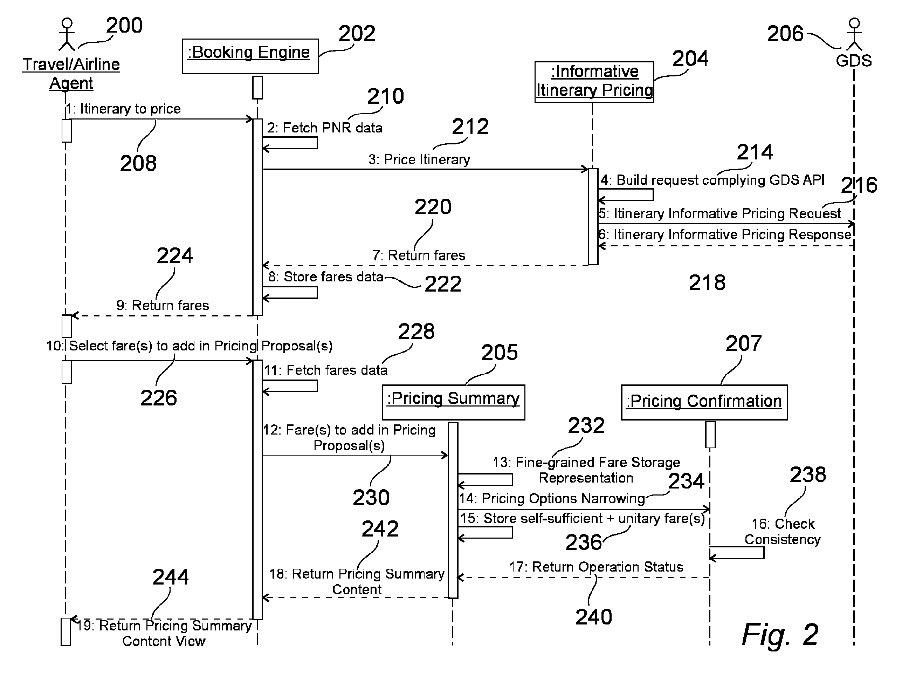

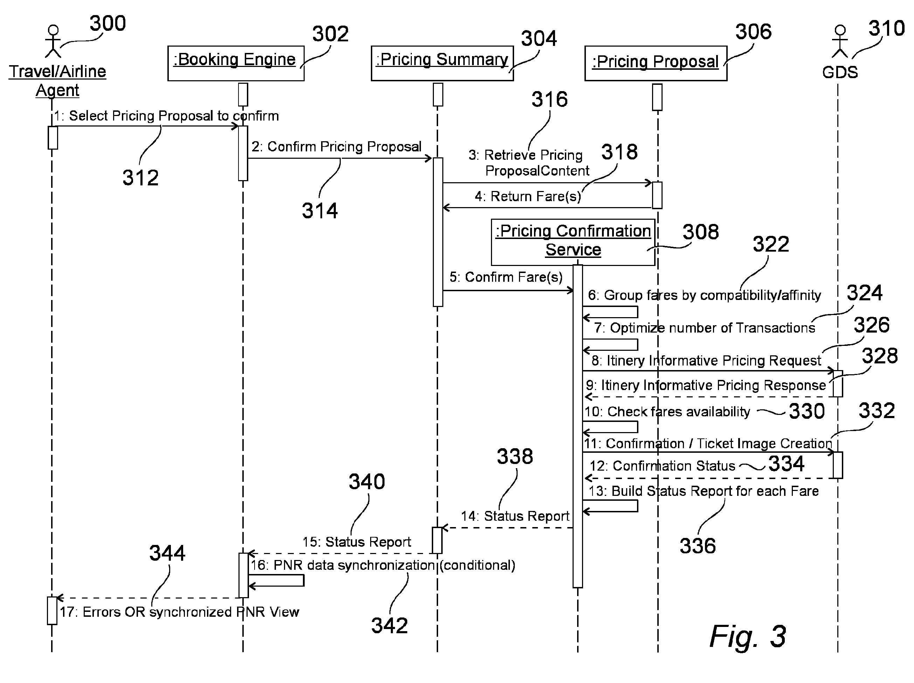

Referring now to figure 2, the pricing proposal sequence diagram will now be described. This adds further detail to the abovementioned steps and sets out the messages and steps required in the process. Figure 3 shows similar messages and steps for the pricing confirmation sequence also described above.

Referring to figure 2, a travel agent 200 is in communication with the booking engine 202. This in turn behaves as middleware between the agent and a global distribution system (GDS) 206. The booking engine includes an informative pricing module or service 204, a pricing summary module or service 205, and a pricing confirmation module or service (207). The pricing summary module contains one or several pricing proposal modules 206. The informative pricing service and the pricing confirmation service, which reside in the booking engine, handle the communication between the booking engine and the GDS. A User Interface allows the interaction between the agent and the booking engine by providing a graphical representation of the pricing summary and pricing proposals. The User Interface also provides the controls that allow use of informative pricing services and pricing confirmation services.

The travel agent determines an itinerary to price at step 208. The PNR data pertaining to the itinerary that needs to be priced is fetched by the booking engine from the session data at step 210. The booking engine uses the PNR data to build the price itinerary request that is fed to the informative itinerary pricing service at step 212. The informative itinerary pricing service formats the informative itinerary pricing request complying with the GDS API at step 214 and sends it to the GDS. The itinerary informative pricing request is sent to the GDS at step 216 and a response is generated at step 218. The informative itinerary pricing service returns the fares to the booking engine in step 220 where they are stored in step 222. The return fares are then communicated to the travel agent at step 224. The travel agent adds the selected fare or fares to the price proposal at step 226.

The booking engine fetches the fare data at step 228 and the fares are added to the price proposal in the pricing summary 205 at step 230. A fare storage representation is carried out at step 232 and a pricing narrowing option is carried out at step 234. The fares are then stored in pricing proposal module 206 in a step 236. The pricing proposal module carries out a consistency check step 238. The pricing proposal module returns an operation status message to the pricing summary module in step 240 and the return pricing summary content is returned to the booking engine at step 242. The pricing summary content view is updated and presented to the travel agent 200.

The query at step 208 is made up of a set of parameters and options. The parameters include the segments that are selected such as Sa, Sb and the parameters include passenger selections, such as $P_i$, $P_j$.

Additionally, global pricing (Og) options are sent, such as Point Of Sale (POS), Point Of Ticketing (POT), ticketing date, taxes, fees etc. Some options (Os) can be associated to segments, such as fare breakpoints. Further, some options (Op) can be associated with passengers, such as discount passenger, type override and airline discounts etc. As an example, for a PNR composed of three passengers *P1*(ADT), *P2*(ADT), P3 (CHD) and two segments *S1*, *S2*, an informative itinerary pricing query encompassing all passengers and all segments, could be quoted as follows:

$$PricingQuery = [\{P1,P2,P3\}, \{S1,S2\}, Og, Os, Op]$$

An informative Itinerary Pricing Reply, such as response 218, is made up of a list of fares, each of which is applicable for one or several passengers. As an example, a fare that applies to passengers *P1* and *P2* (i.e. *P1* and *P2* are eligible for fare F1) can be quoted as follows:

$$F1\{P1,P2\}$$

An informative Itinerary Pricing Reply holding three available fares for ADT passengers and three available fares for CHD passenger could thus be quoted as follows:

$$PricingReply = [F1\{P1,P2\}, F2\{P1,P2\}, F3\{P1,P2\}, F4\{P3\}, F5\{P3\},$$
$$F6\{P3\}]$$

The invention provides a graphical representation as a result of the steps of storing informative itinerary pricing reply in the pricing proposal(s).The agent selects one or more fares contained in the informative pricing reply and generates one or more pricing proposals. For a given fare the pricing proposal may relate only to a subset of the eligible passengers.

An important element of the fare storage representation in the pricing proposal is a high degree of coupling between a given fare and the originator pricing options. The fare is always stored in a pricing proposal together with the originator's pricing options.

As previously mentioned, only a subset of eligible passengers may be selected while adding a fare to the pricing proposal. Returning to the earlier example, if the pricing reply is:

$$PricingReply = [F1\{P1,P2\}]$$

the Agent may want to add the Fare F1 to the Pricing Proposal just for Passenger *P1* despite the fact that *P1* and *P2* are both eligible. This is an advantage of the present invention, which allows fares to be stored for each passenger in the pricing proposal. In the above example what is actually stored in the Pricing Proposal is: F1{*P1*}. On the other hand, if the agent adds the fare to all the eligible passengers, one fare will also be stored in the pricing proposal for each passenger.

Returning again to the example, if the pricing reply is:

$$PricingReply = [F1\{P1,P2\}],$$

and if the Agent wants to add F1 in the Pricing Proposal for both *P1* and *P2,* what is actually stored in the Pricing Proposal is:

$$F1\{P1\}, F1\{P2\}$$

The ability to be able to adapt the pricing proposal as described above makes the pricing proposal management provided by the present invention considerably more flexible than previous systems and methods. The price option narrowing step 234 not only makes use of the fact that each fare applies to the single passenger and that each fare is linked to a specific pricing option, but also takes into account the fact that the informative itinerary pricing query may include passenger associated pricing options. The following informative Itinerary pricing query will now be considered by way of example.

$$PricingQuery = [\{P1, P2, P3\}, \{S1, S2\}, Og, Os, O1p1p2, O2p3]$$

Where: $O1p1p2$ are the pricing options associated to $P1$ and $P2$; and $O2p3$ is the pricing option associated to $P3$.
Assuming the agent wishes to apply a discount to the passengers, for example, the same discount can be requested for both ADT passengers ($P1$ and $P2$) and a different discount requested for the CHD passenger ($P3$). The corresponding informative itinerary pricing reply would be updated as follows:

$$PricingReply = [F1\{P1, P2\}, F2\{P1, P2\}, F3\{P1, P2\}, F4\{P3\}, F5\{P3\},$$
$$F6\{P3\}]$$

F1, F2, and F3 relate to the fares for the combination of passengers P1 and P2. F4, F5 and F6 relate to fares for passenger P3. If the agent decides to add F1 for both $P1$ and $P2$ and F4 for $P3$ in the Pricing Proposal the invention will apply a pricing option narrowing strategy to ensure that, whenever necessary, each fare is stored with its originator options narrowed to its own context. Returning once more to the example, what is actually stored in the Pricing Proposal is:

$$F1\{P1\} \text{ linked to } [\{P1\}, \{S1, S2\}, Og, Os, O1p1] \text{ pricing options}$$

$$F1\{P2\} \text{ linked to } [\{P2\}, \{S1, S2\}, Og, Os, O1p2] \text{ pricing options}$$

$$F4\{P3\} \text{ linked to } [\{P3\}, \{S1, S2\}, Og, Os, O2p3] \text{ pricing options}$$

It is possible that certain pricing options may be replicated where several fares are returned by the same informative itinerary pricing query. In addition, pricing options are linked to the context of each fare for the passengers involved. The duplication and linkage can produce a memory overhead. The present invention can rectify this by making links for shared instances and using cloning in order to create as few new instances as possible.
Despite the fact that storage of the present invention has been optimized, a correlation link is maintained to identify fares which come from the same informative itinerary pricing command. This has advantages in both the pricing proposal management and the subsequent pricing proposal confirmation processes.
The pricing proposal is intended to be confirmed and converted into one or several pricing records at some point in time. The pricing records will be later used to issue ticket documents and the construction and confirmation of one or several pricing proposals is in fact a type of ticket document issuance path
Generally, a ticket issuance system will only issue one ticket document for a given passenger and a given segment (or a given set of segments). This rule is taken into account all along the whole document issuance path. As a result, overlapping fares which could ultimately result in overlapping ticket images should be avoided. The present invention avoids overlapping fares and tickets by ensuring that only one fare is added to the pricing proposal for a given combination of passenger and segment (or segments). This feature gives rise to an advantage in the preparation of ticket issuance and avoids inconsistent pricing proposal contents from an early stage. By way of example, if the agent requests an informative itinerary pricing query as follows:

$$PricingQuery = [\{P1, P2, P3\}, \{S1, S2\}, Og, Os, Op1p2p3]$$

and receives the following reply:

$$PricingReply = [F1\{P1, P2\}, F2\{P1, P2\}, F3\{P1, P2\}, F4\{P3\}, F5\{P3\},$$
$$F6\{P3\}]$$

then the following listed operations will fail:

a) Adding F1{$P1$} + F2{$P1$} to a pricing proposal at the same time. This would fail because there is an overlap of the fares F1 and F2 to be added.
b) Adding F1{P1} and then F2{P1} to the pricing proposal. This would fail because of the overlap between the fare F1 already present in the pricing proposal and the fare F2 to be added.

A consistency check may be carried out between the pricing proposal contents and the pricing records if necessary.

The present invention also provides a mechanism for removing one or more fares from the pricing proposal container or pricing summary. Fares obtained from a single informative itinerary pricing query may need to be grouped together. As a result, removal of those fares must also be grouped together. The correlation link between fares coming from the same informative itinerary pricing query enables a warning to be issued to the agent in such circumstances so that the group is treated as a whole.

Referring now to figure 3, the pricing confirmation sequence will now be described. The travel agent 300 is in communication with the booking engine 302, which behaves as a middleware between the agent and the GDS 307. The booking engine features an informative pricing module or service (also referred to as a pricing proposal module) 306, a pricing confirmation module or service 308, and a pricing summary module or service 304. The pricing summary module contains one or several pricing proposal modules 306.

As previously mentioned, the informative pricing service and the pricing confirmation service, which reside in the booking engine, handle the communication between the booking engine and the GDS. A User Interface allows the interaction between the agent and the booking engine by providing a graphical representation of the pricing summary and pricing proposals. The User Interface also provides the controls that allow use of informative pricing services and pricing confirmation services.

In a first step 312, the travel agent identifies in the User Interface the pricing proposal which is to be confirmed. Then the agent requests pricing confirmation of the selected pricing proposal to the pricing summary module in step 314, via the User Interface. The pricing summary module retrieves the pricing proposal contents from the pricing proposal module 306 in step 316. The pricing proposal module returns the fare in step 318. In step 320, the pricing summary module requests fare confirmation via the pricing confirmation service. The pricing confirmation service groups the fares by compatibility and affinity in step 322. The number of transactions is optimized in step 324. The itinerary informative pricing request is sent to the GDS in step 326 and responses generated in step 328. The pricing confirmation service checks fare validity at step 330. A confirmation and pricing record creation message and pricing record creation request are sent to the GDS in a step 322 and a confirmation status is returned from the GDS to the pricing confirmation service module at step 334. The pricing confirmation service builds a status report for each fare at step 336, which is then communicated in a status report in step 338 to the pricing summary module. The pricing summary module forwards the status report at step 340 to the booking engine, where PNR data synchronization occurs at step 342. At step 344 either a synchronized PNR view is communicated to the agent 300, via the User Interface, or in case of error an error message will be presented.

The pricing proposal confirmation process converts fares contained in pricing proposal into a pricing record. Due to the self-sufficient fare storage representation described above the pricing proposal holds all the necessary data to enable fare confirmation to be carried out. The process of converting pricing proposals to pricing records is transparent and integrated and the steps are not visible to the agent. For certain use cases, additional operations may be required to confirm a fare. In this case, options are presented to the agent for selection and the system continues to operate based on the responses given.

As previously mentioned the present invention attempts to minimize the number of informative itinerary pricing queries sent at the time of confirmation of the pricing proposal. In order to do this, the system builds as few as possible pricing queries (i.e. optimizing the number of pricing queries needed by combining several pricing queries in one when possible) as is described below, with reference to an example. Assuming the agent has made a first request as follows:

$$\text{PricingQuery} = [\{P1, P2\}, \{S1, S2\}, Og, Os]$$

the system may then return the following reply:

$$\text{PricingReply} = [F1\{P1, P2\}]$$

Subsequently, the agent adds the following fare to the pricing proposal:

$$F1\{P1\} + F1\{P2\}$$

The agent then requests a further pricing query for an additional passenger as follows:

$$\text{PricingQuery} = [\{P3\}, \{S1, S2\}, Og, Os]$$

In this case, the system replies:

$$\text{PricingReply} = [F'1\{P3\}]$$

The agent can then add the following fare to the pricing proposal:

$$F'1\{P3\}$$

The resultant contents of the pricing proposal are now as follows:

$$F1\{P1\} \text{ linked to } [\{P1\}, \{S1, S2\}, Og, Os] \text{ pricing options}$$

$$F1\{P2\} \text{ linked to } [\{P2\}, \{S1, S2\}, Og, Os] \text{ pricing options}$$

$$F'1\{P3\} \text{ linked to } [\{P3\}, \{S1, S2\}, Og, Os] \text{ pricing options}$$

When the pricing proposal is confirmed the system determines that the three fares are compatible in terms of pricing options even though they come from distinct pricing transactions. As a result, only one informative itinerary pricing query will be sent when the pricing proposal confirmation process is carried out. This informative itinerary pricing query is as follows:

$$\text{PricingQuery} = [\{P1,P2,P3\}, \boldsymbol{\{S1,S2\}, Og, Os}]$$

The above scenario can be augmented by the following example. An Agent requests informative pricing S1, S2 for P1, P2, to be added to the pricing summary. The system will store F1 Informative Pricing for P1 (S1, S2) and P2 (S1, S2). The agent now requests Informative pricing S1, S2 for P3, which is added to pricing summary. The system will store F1' for P3(S1,S2) pricing3. At the time the agent performs the confirmations, the system will not redo the three transactions above. The system optimizes the combination of the transactions, if possible assuming combinable pricing elements (Og, Os) and similar selections (i.e. S1 and S2) are being used. In this case, the system will prepare one pricing transaction rather than three, with the following resulting in [{*P1, P2, P3*}, **{*S1, S2*}, *Og*,** Os as above.

Once the pricing proposal confirmation process has completed, the system will report the status associated with each fare contained in the pricing proposal. If for any reason a fare has failed, an error message will be identified to the agent thereby allowing the agent to effect the necessary corrective action and subsequently confirm the pricing proposal. In this case, the system will only deal with the previously failed fares and ignore the previously successful ones.

Figures 4 to 14 show screenshots of various stages of operation of the system of the present invention, in respect of an illustrative example.

Referring initially to figure 4, the screenshot shows a pricing window User Interface 400 into which a travel agent can request informative pricing for a travel itinerary. The pricing window includes pricing options in which fields are identified. The fields include passenger names and passenger types (PTC) 404, and detailed flight information 406. The agent can select the different passengers and different sectors for which the system is required to return different proposals in respect of fares. Additionally, the agent can input pricing options, in association with the selected passengers and sectors. Among the possible options the agent can decide to override the passenger PTC, force a fare breakpoint, search for specific discounts etc. Also the agent can, in association with the selected passengers and sectors, request advanced options such as force the application/exemption of some fees, waive some taxes, etc. After selecting passengers and sectors and defining all the pricing options, the agent can request the informative pricing. The screenshot also shows a price summary 408 which can be used to store the results of the informative pricing at the request of the travel agent.

The results of informative pricing can be stored in the pricing proposals that are shown as "Pricing 1", "Pricing 2" and "Pricing 3" in price summary 408. Each time an informative pricing result is stored in a pricing proposal contained in price summary 408, all the selected passengers and sectors, as well as all the options associated to the informative pricing request are stored.

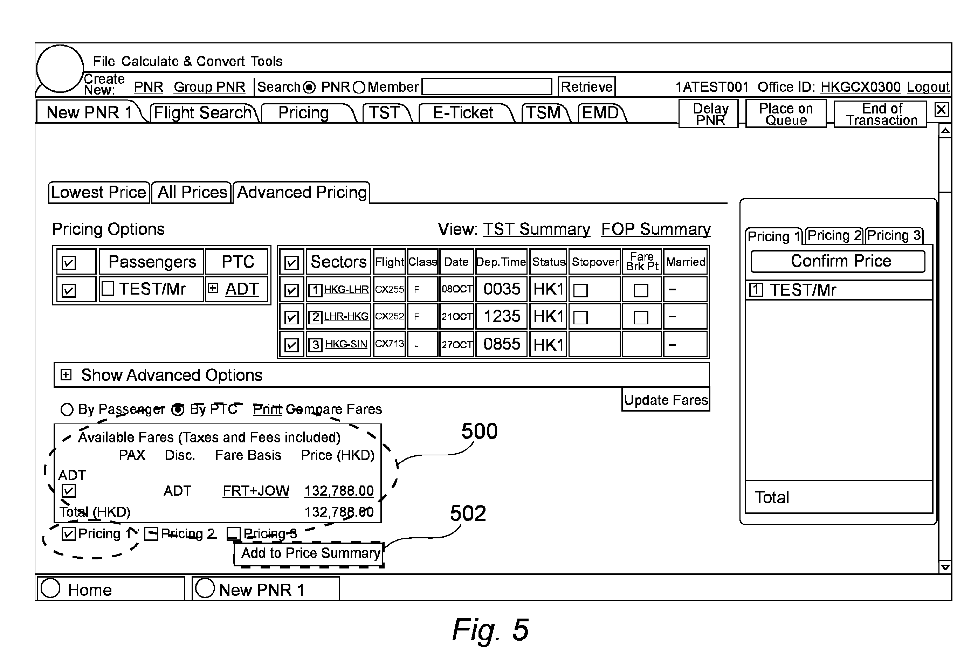

Figure 5 shows a similar screenshot to figure 4, in which a fare has been returned as shown at 500 as the result of an informative pricing request. The agent can select button 502 to add the fare to pricing proposal "Pricing 1" of the price summary.

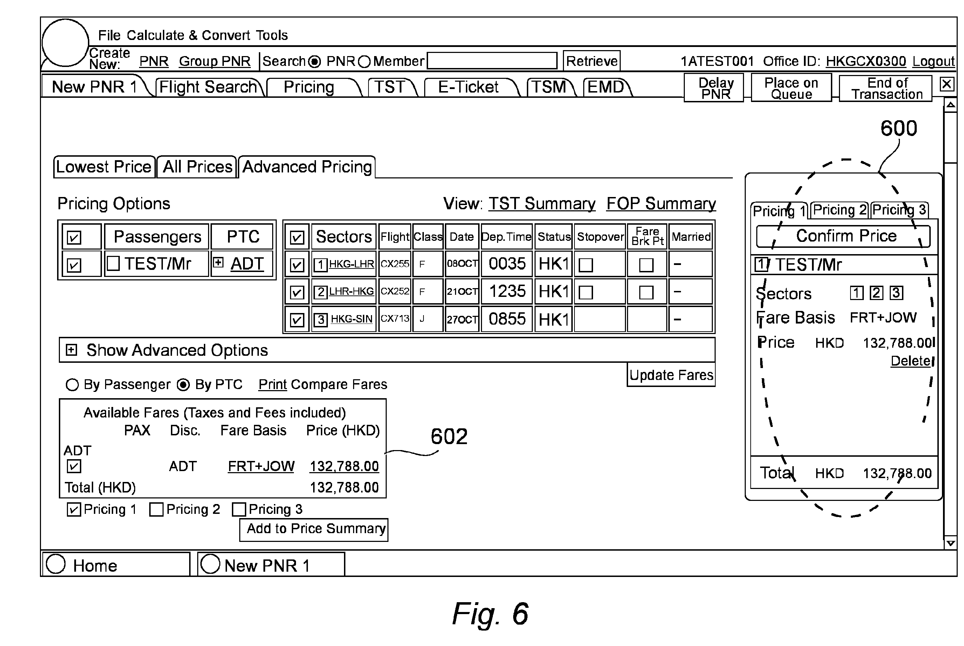

Figure 6 shows how the fares have been introduced into the price summary as shown at 600. The details from the fare 602 have been transferred into the price summary. This is stored with the associated pricing option so that this fare can be later selected by the agent if purchase of this fare is required.

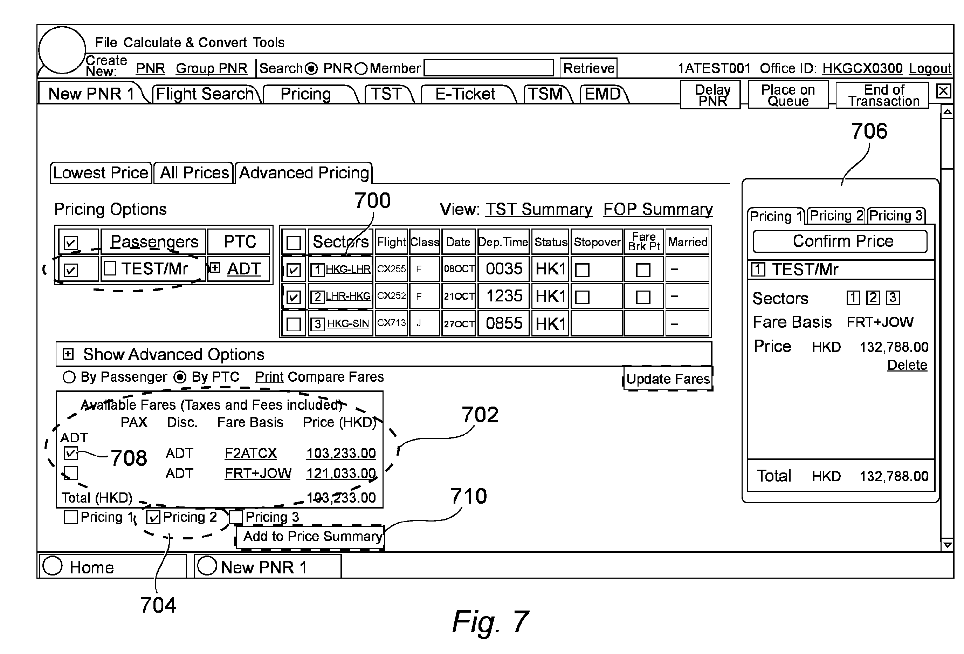

Figure 7 shows the informative pricing for all passengers but just for sectors one and two 700. This generates a further fare 702 which can be added to pricing 2, 704 in the pricing summary 706. The agent can select the preferred fare 708 to be added to the price summary by the button 710.

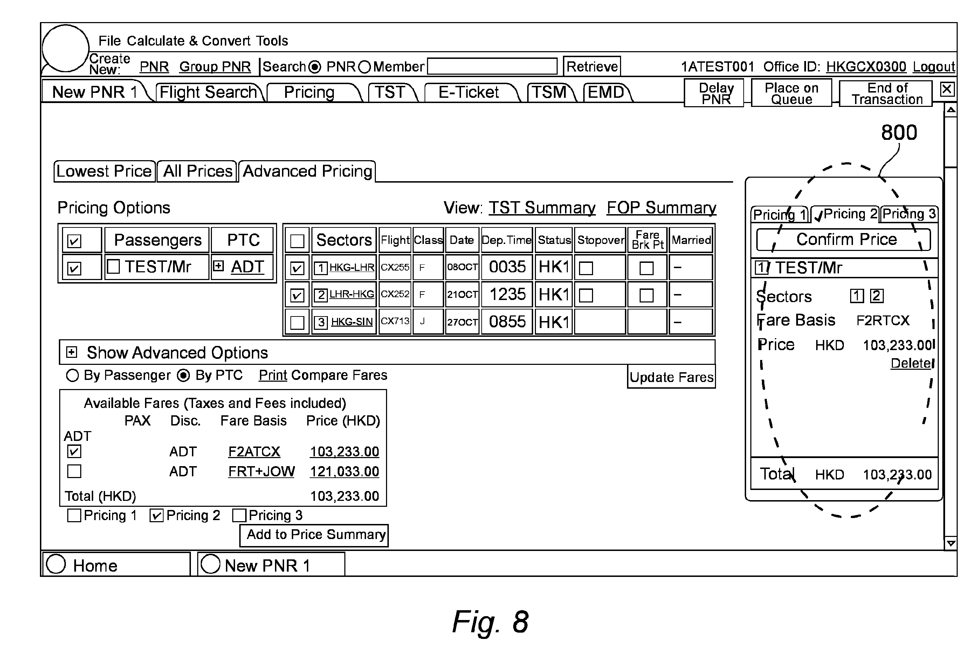

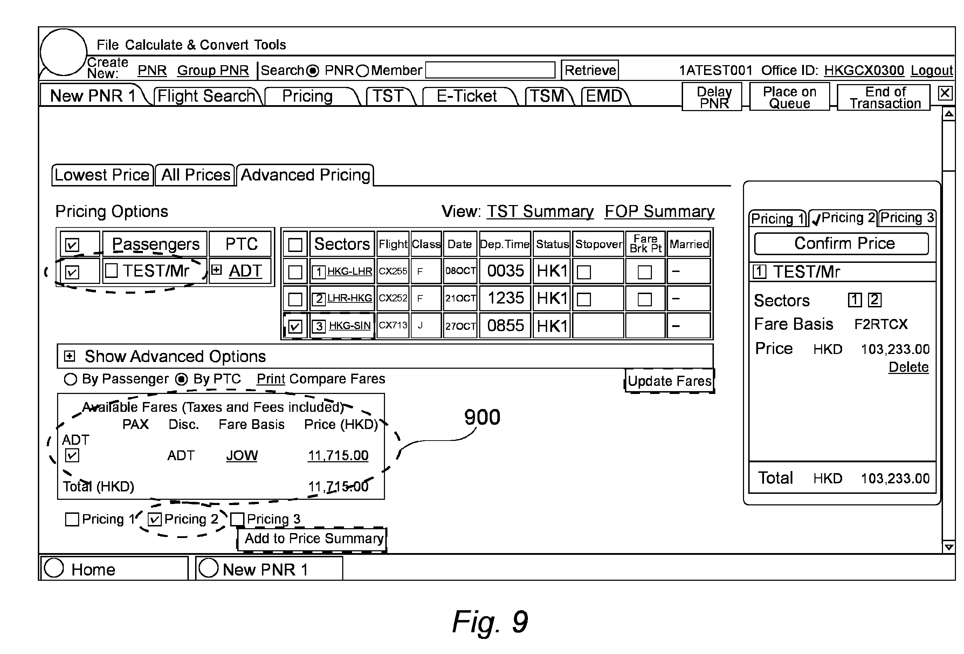

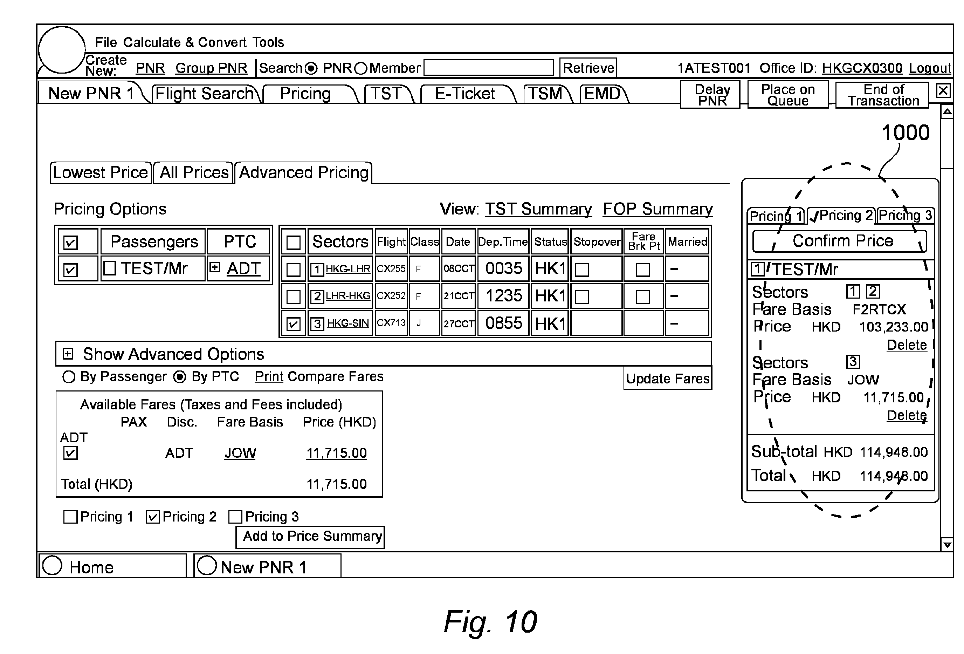

Figure 8 shows the selected fare updated in the pricing summary of pricing tag 2, 800. Figure 9 shows the screenshot for identifying the informative pricing for all passengers on sectors three only and adding this fare to the pricing summary 2, 900. Figure 10 shows the updated pricing summary 1000 including the informative pricing for all passengers and all segments (one, two and three).

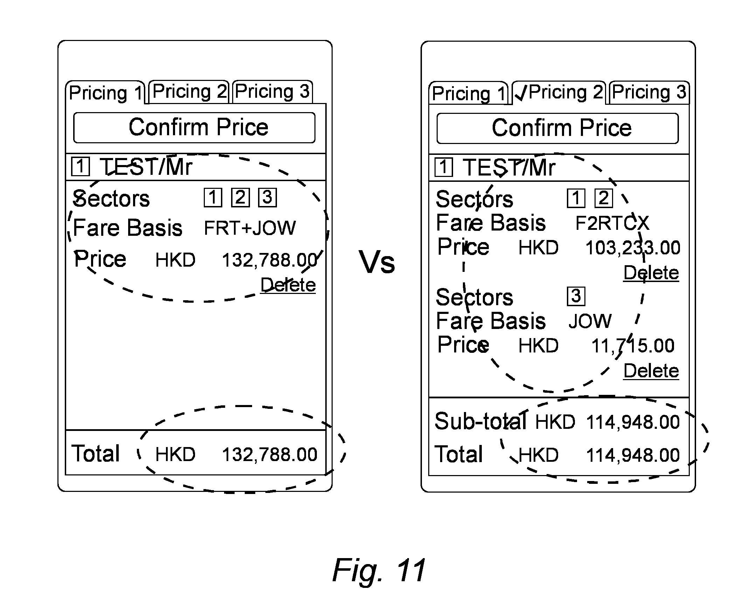

Figure 11 shows the pricing summary for pricing 1 and pricing 2 tabs, representing two different pricing proposals. These views can be used by the agent to compare the pricing proposal 1 and 2 for all passengers and all segments where the informative pricing has been carried out by means of flights encompassing all sectors for the pricing proposal 1; and flights encompassing first and second sectors in one informative pricing and the third sector in the second informative pricing in pricing proposal 2.

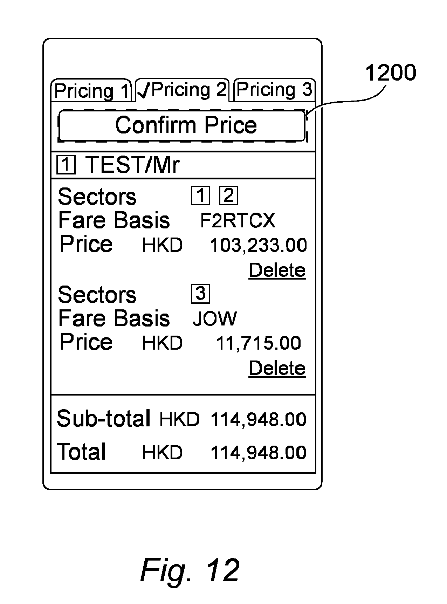

Based on the overall fare for each pricing proposal the agent selects pricing proposal 2 as shown in figure 12. Pressing the confirm price button 1200 will automatically replay all the informative pricing requests in a mode that triggers creation of the pricing records. The informative pricing requests include associated input parameters such as segment and passenger selection and pricing options. This is different to the informative pricing which does not create any persistent data.

The pricing records will persist into the system and are mandatory elements in order to issue tickets. Pricing proposal confirmation may be carried out at the same time as the pricing proposal is generated or escalated at a later time, as the pricing proposal retains the information until deleted.

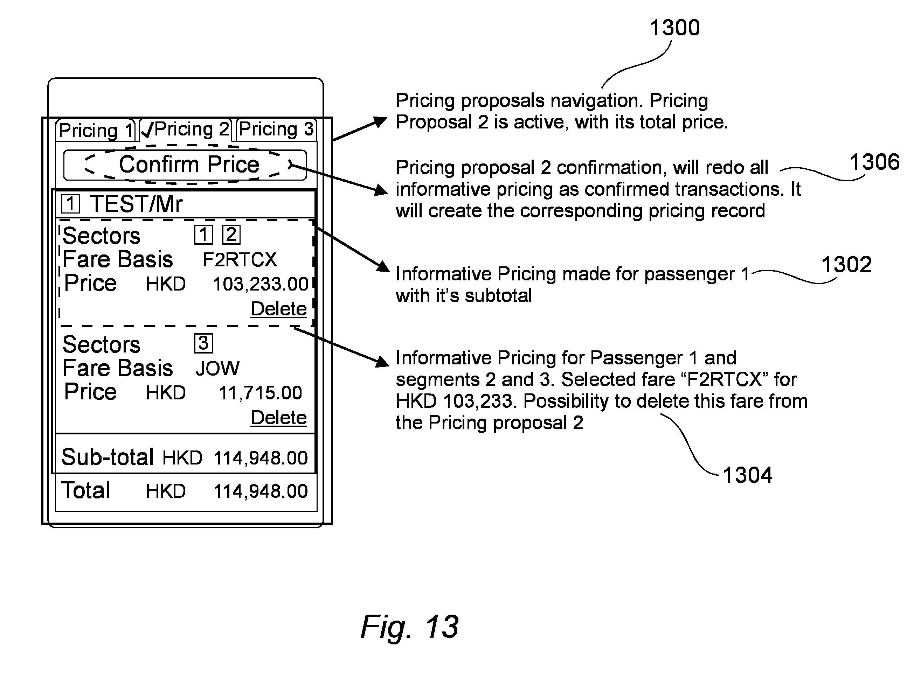

Figure 13 shows a detailed view of the pricing summary window. The pricing summary includes pricing proposal navigation 1300; informative pricing for passenger 1, with the subtotal 1302; and informative pricing for passenger 1 and segments two and three which can be potentially deleted 1304. In addition, the pricing summary includes the pricing confirmation button 1306 as previously described.

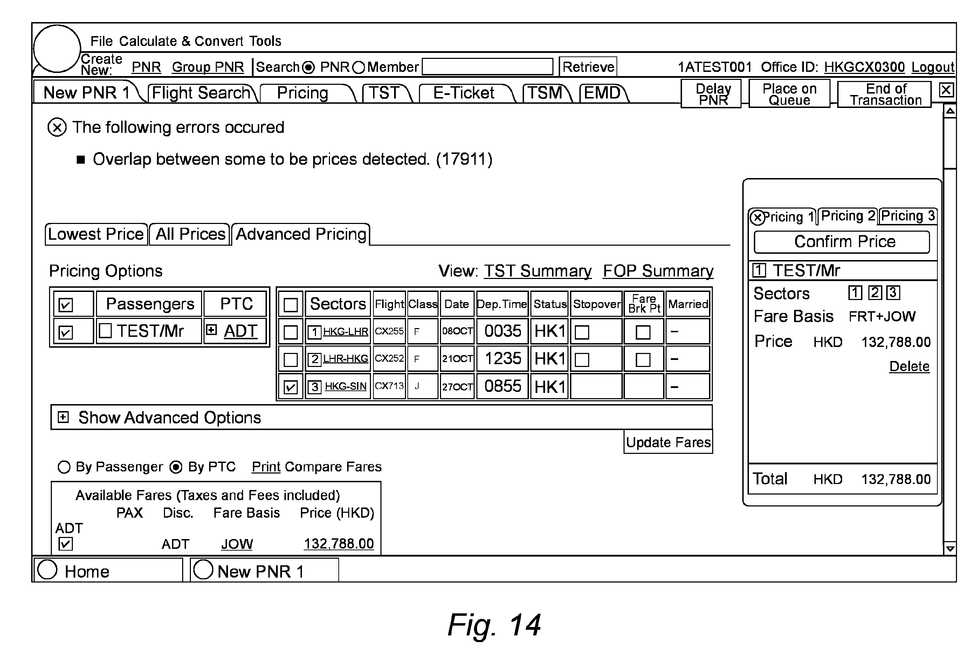

Figure 14 shows the error message presented to the agent where the agent attempts to add a fare to a pricing summary related to passengers and segments already present in the pricing summary.

The invention can be extended to any kind of process involving several informative transactions to be computed and assembled into proposals that can be compared among each other before confirmation. The expertise of the agent remains a key value of the process. The system provides the needed automation to avoid mistakes when the agent wants to confirm a proposal.

A person skilled in the art will understand that some or all of the functional entities as well as the processes themselves may be embodied in software, or one or more software-enabled modules and/or devices, or in any combination thereof. The software may operate on any appropriate computer or other machine. The operation of the invention provides a number of transformations, such as the changes to the summary, as information is added; conversion of data to a ticket, etc.

This invention has been described with reference to the purchase of tickets in the travel environment. However, it will be appreciated that the invention may apply to other environments. It will be appreciated that this invention may be varied in many different ways and still remain within the intended scope of the invention.

**Claims**

1. A system for managing pricing proposals and associated options in the travel industry with respect to the provision of travel services or products, wherein the system is capable of communicating with a booking engine and a global distribution system (GDS), the system being operable by a reservation agent, wherein the system comprises:

   - an itinerary pricing User Interface for determining an itinerary for one or more predetermined passenger, segment and option combinations, sending one or more informative pricing requests to a GDS and receiving as a result of the requests one or more fares for each predetermined passenger, segment and option combination from the GDS;
   - a pricing summary module and User Interface for storing the one or more fares for each predetermined passenger, segment and option combination and build one or more pricing proposals, so that the one or more pricing proposals are available for subsequent use, such as issuing a ticket associated with one or more of the pricing proposals, wherein the pricing summary User Interface provides an intuitive representation of the one or more pricing proposals in order to compare the pricing proposals.

2. The system of claim 1, further comprising a pricing confirmation module for confirming, on request, via the pricing summary User Interface, one or more pricing proposal and automatically repeating the steps necessary for creating one or more pricing record needed to issue the ticket corresponding to the one or more pricing proposal.

3. The system of claim 1 or claim 2, wherein the itinerary pricing User Interface stores the results of the informative itinerary pricing request and input parameters used to generate the informative itinerary pricing request, in the pricing summary module.

4. The system of any preceding claim, wherein the itinerary informative pricing request is determined by a reservation agent selecting from predetermined sets of passengers, segments and options and associating generated pricing options relating to the selected passengers, segments and options.

5. The system of any preceding claim, wherein the itinerary pricing User Interface allows an agent to forward to the GDS, via a booking engine, the selected passengers, segments and options as well as the associated options as inputs for the informative pricing request.

6. The system of any preceding claim, wherein the pricing proposal comprises a set of results of informative pricing results, such as fares, and a set of input parameters that were used to generate each informative pricing result.

7. The system of any preceding claim, wherein comparison of the pricing proposals is based on a price criteria or an attribute of the fares composing the pricing proposal.

8. The system of any preceding claim, wherein the pricing summary User Interface can be used to trigger the confirmation of the selected pricing proposal via the pricing confirmation module.

9. A method for managing pricing proposals and associated options in the travel industry with respect to the provision of travel services or products, operating on a system capable of communicating with a booking engine and a global distribution system (GDS), and being operable by a reservation agent, wherein the method comprises:

- determining via an itinerary pricing User Interface an itinerary for one or more predetermined passenger, segment and option combinations from the GDS by sending one or more informative pricing requests to the GDS and receiving as a result of the requests one or more fares for each predetermined passenger, segment and option combination from the GDS;
- storing via a pricing summary module and User Interface the one or more fares for each predetermined passenger, segment and option combination and build one or more pricing proposal, so that the one or more pricing proposals are available for subsequent use, such as issuing a ticket associated with one or more of the pricing proposals, wherein the pricing summary User Interface provides an intuitive representation of the one or more pricing proposals in order to compare the pricing proposals.

10. The method of claim 9, further comprising confirming via a pricing confirmation module, on request, via the pricing summary User Interface, one or more pricing proposal and automatically repeating the steps necessary for creating one or more pricing record needed to issue the ticket corresponding to the one or more pricing proposal.

11. The method of claim 9 or claim 10, further comprising storing via the itinerary pricing User Interface the results of the informative itinerary pricing request and input parameters used to generate the informative itinerary pricing request, in the pricing summary module.

12. The method of any of claims 9 to 11, further comprising determining the itinerary informative pricing request by means of a reservation agent making a selection from predetermined sets of passengers, segments and options and associating generated pricing options relating to the selected passengers, segments and options.

13. The method of any of claims 9 to 12, further comprising forwarding via the itinerary pricing User Interface to the GDS, via a booking engine, the selected passengers, segments and options as well as the associated options as inputs for the informative pricing request,.

14. The method of any of claims 9 to 13, further comprising forming the pricing proposal of a set of results of informative pricing results, such as fares, and a set of input parameters that were used to generate each informative pricing result.

15. The method of any of claims 9 to 14, further comprising comparing the pricing proposals based on a price criteria or an attribute of the fares composing the pricing proposal.

16. The method of any of claims 9 to 15, further comprising triggering the pricing summary User Interface to confirm the selected pricing proposal via the pricing confirmation module.

17. A computer program comprising instructions for carrying out the steps of the method according to any one of claims 1 to 9, when said computer program is executed on a computer system.

*Fig. 1*

Fig. 2

EP 2 595 107 A1

Fig. 3

File Calculate & Convert Tools

Create New: | PNR  Group PNR | Search ⊙ PNR ○ Member [                    ] | Retrieve | 1ATEST001  Office ID: HKGCX0300  Logout

| New PNR 1 | Flight Search | Pricing | TST | E-Ticket | TSM | EMD | | Delay PNR | Place on Queue | End of Transaction | ⊠ |

| Lowest Price | All Prices | Advanced Pricing |

Pricing Options ~402      404

406

View: TST Summary  FOP Summary

408

| ☑ | Passengers | PTC |
| ☑ | ☐ TEST/Mr | ⊞ ADT |

| ☑ | Sectors | Flight | Class | Date | Dep.Time | Status | Stopover | Fare Brk Pt | Married |
|---|---|---|---|---|---|---|---|---|---|
| ☑ | 1 HKG-LHR | CX255 | F | 08OCT | 0035 | HK1 | ☐ | ☐ | – |
| ☑ | 2 LHR-HKG | CX252 | F | 21OCT | 1235 | HK1 | ☐ | ☐ | – |
| ☑ | 3 HKG-SIN | CX713 | J | 27OCT | 0855 | HK1 | | | – |

⊞ Show Advanced Options

Update Fares

| Pricing 1 | Pricing 2 | Pricing 3 |

Confirm Price

1 TEST/Mr

Total

○ Home | ○ New PNR 1

EP 2 595 107 A1

*Fig. 4*

File Calculate & Convert Tools

New PNR 1 \ Flight Search \ Pricing \ TST \ E-Ticket \ TSM \ EMD \ | Delay PNR | Place on Queue | End of Transaction | ⊠

Lowest Price | All Prices | Advanced Pricing

**Pricing Options**

View: TST Summary  FOP Summary

| ☑ | Passengers | PTC |
|---|---|---|
| ☑ | ☐ TEST/Mr | ⊞ ADT |

| ☑ | Sectors | Flight | Class | Date | Dep.Time | Status | Stopover | Fare Brk Pt | Married |
|---|---|---|---|---|---|---|---|---|---|
| ☑ | [1] HKG-LHR | CX255 | F | 08OCT | 0035 | HK1 | ☐ | ☐ | – |
| ☑ | [2] LHR-HKG | CX252 | F | 21OCT | 1235 | HK1 | ☐ | ☐ | – |
| ☑ | [3] HKG-SIN | CX713 | J | 27OCT | 0855 | HK1 | | | – |

⊞ Show Advanced Options

Update Fares

○ By Passenger ⊙ By PTC  Print Compare Fares

Available Fares (Taxes and Fees included) — 500

|  | PAX | Disc. | Fare Basis | Price (HKD) |
|---|---|---|---|---|
| ADT | | | | |
| ☑ | | ADT | FRT+JOW | 132,788.00 |
| Total (HKD) | | | | 132,788.00 |

☑ Pricing 1  ☐ Pricing 2  ☐ Pricing 3 — 502

Add to Price Summary

Pricing 1 | Pricing 2 | Pricing 3

Confirm Price

[1] TEST/Mr

Total

○ Home | ○ New PNR 1

EP 2 595 107 A1

*Fig. 5*

EP 2 595 107 A1

File  Calculate & Convert  Tools

Create New:  PNR  Group PNR  |Search ⦿ PNR ◯ Member [                    ] |Retrieve|          1ATEST001  Office ID: HKGCX0300  Logout

New PNR 1 \ Flight Search \ Pricing \ TST \ E-Ticket \ TSM \ EMD \          Delay PNR | Place on Queue | End of Transaction  ☒

600

| Lowest Price | All Prices | Advanced Pricing |

Pricing Options                                      View: TST Summary  FOP Summary

| ☑ | Passengers | PTC |
|---|---|---|
| ☑ | ☐ TEST/Mr | ⊞ ADT |

| ☑ | Sectors | Flight | Class | Date | Dep. Time | Status | Stopover | Fare Brk Pt | Married |
|---|---|---|---|---|---|---|---|---|---|
| ☑ | ① HKG-LHR | CX255 | F | 08OCT | 0035 | HK1 | ☐ | ☐ | - |
| ☑ | ② LHR-HKG | CX252 | F | 21OCT | 1235 | HK1 | ☐ | ☐ | - |
| ☑ | ③ HKG-SIN | CX713 | J | 27OCT | 0855 | HK1 |  |  | - |

⊞ Show Advanced Options

|                                              | Update Fares |

◯ By Passenger  ⦿ By PTC   Print Compare Fares

Available Fares (Taxes and Fees included)
   PAX    Disc.    Fare Basis    Price (HKD)
ADT
☑            ADT      FRT+JOW      132,788.00
Total (HKD)                          132,788.00

602

☑ Pricing 1  ☐ Pricing 2  ☐ Pricing 3
          Add to Price Summary

Pricing 1 | Pricing 2 | Pricing 3

Confirm Price

① TEST/Mr

Sectors        ① ② ③
Fare Basis   FRT+JOW
Price     HKD    132,788.00
                        Delete

Total    HKD    132,788.00

◯ Home | ◯ New PNR 1

*Fig. 6*

EP 2 595 107 A1

File  Calculate & Convert  Tools

Create New:  PNR  Group PNR  |Search⦿ PNR○Member[                    ] |Retrieve|    1ATEST001  Office ID: HKGCX0300  Logout

| New PNR 1 \ Flight Search \ Pricing \ TST \ E-Ticket \ TSM \ EMD \ | Delay PNR | Place on Queue | End of Transaction | ⊠ |

**706**

| Lowest Price | All Prices | Advanced Pricing |

Pricing Options                                    **700**                    View: TST Summary  FOP Summary

| Pricing 1 | Pricing 2 | Pricing 3 |

| Confirm Price |

| | ☑ | Passengers | PTC |
| | ☑ | ☐ TEST/Mr | ⊞ ADT |

| ☐ | Sectors | Flight | Class | Date | Dep.Time | Status | Stopover | Fare Brk Pt | Married |
|---|---------|--------|-------|------|----------|--------|----------|-------------|---------|
| ☑ | ① HKG-LHR | CX255 | F | 08OCT | 0035 | HK1 | ☐ | ☐ | – |
| ☑ | ② LHR-HKG | CX252 | F | 21OCT | 1235 | HK1 | ☐ | ☐ | – |
| ☐ | ③ HKG-SIN | CX713 | J | 27OCT | 0855 | HK1 | | | – |

① TEST/Mr

Sectors     ① ② ③

Fare Basis    FRT+JOW

Price    HKD    132,788.00
                        Delete

| ⊞  Show Advanced Options |

○ By Passenger ⦿ By PTC   Print Compare Fares                                    |Update Fares|

Available Fares (Taxes and Fees included)                        **702**

|  | PAX | Disc. | Fare Basis | Price (HKD) |
|--|-----|-------|------------|-------------|
| ADT | | | | |
| ☑ **708** | ADT | | F2ATCX | 103,233.00 |
| ☐ | ADT | | FRT+JOW | 121,033.00 |
| Total (HKD) | | | | 103,233.00 |

**710**

☐ Pricing 1  ☑ Pricing 2  ☐ Pricing 3

| Add to Price Summary |

Total   HKD   132,788.00

| ○ Home / | ○ New PNR 1 |

**704**

*Fig. 7*

File  Calculate & Convert  Tools

Create New: PNR   Group PNR   |Search ⦿ PNR ○ Member [                    ] | Retrieve |     1ATEST001  Office ID: HKGCX0300  Logout

| New PNR 1 \ Flight Search \ Pricing \ TST \ E-Ticket \ TSM \ EMD \ |  | Delay PNR | Place on Queue | End of Transaction | ☒ |

**800**

| Lowest Price | All Prices | Advanced Pricing |

Pricing Options                          View: TST Summary   FOP Summary

| ☑ | Passengers | PTC |
|---|---|---|
| ☑ | ☐ TEST/Mr | ⊞ ADT |

| ☐ | Sectors | Flight | Class | Date | Dep.Time | Status | Stopover | Fare Brk Pt | Married |
|---|---|---|---|---|---|---|---|---|---|
| ☑ | ① HKG-LHR | CX255 | F | 08OCT | 0035 | HK1 | ☐ | ☐ | – |
| ☑ | ② LHR-HKG | CX252 | F | 21OCT | 1235 | HK1 | ☐ | ☐ | – |
| ☐ | ③ HKG-SIN | CX713 | J | 27OCT | 0855 | HK1 |  |  | – |

⊞ Show Advanced Options

○ By Passenger  ⦿ By PTC   Print Compare Fares                            | Update Fares |

Available Fares (Taxes and Fees included)
          PAX    Disc.   Fare Basis    Price (HKD)
ADT
| ☑ |  | ADT | F2ATCX | 103,233.00 |
| ☐ |  | ADT | FRT+JOW | 121,033.00 |

Total (HKD)                              103,233.00

☐ Pricing 1   ☑ Pricing 2   ☐ Pricing 3

| Add to Price Summary |

Pricing 1 | ☑ Pricing 2 | Pricing 3

| Confirm Price |

① TEST/Mr

Sectors        ① ②
Fare Basis     F2RTCX
Price    HKD    103,233.00
                        Delete

Total    HKD    103,233.00

| ○ Home | ○ New PNR 1 |

*Fig. 8*

EP 2 595 107 A1

File  Calculate & Convert  Tools

Create New: PNR  Group PNR  |Search ⊙ PNR ○ Member [                    ] |Retrieve|      1ATEST001  Office ID: HKGCX0300  Logout

New PNR 1 \ Flight Search \ Pricing \ TST \ E-Ticket \ TSM \ EMD \      | Delay PNR | Place on Queue | End of Transaction | ☒

[Lowest Price][All Prices][Advanced Pricing]

Pricing Options                                        View: TST Summary  FOP Summary

| ☑ | Passengers | PTC |
|---|---|---|
| ☑ | ☐ TEST/Mr | ⊞ ADT |

| ☐ | Sectors | Flight | Class | Date | Dep.Time | Status | Stopover | Fare Brk Pt | Married |
|---|---|---|---|---|---|---|---|---|---|
| ☐ | 1 HKG-LHR | CX255 | F | 08OCT | 0035 | HK1 | ☐ | ☐ | – |
| ☐ | 2 LHR-HKG | CX252 | F | 21OCT | 1235 | HK1 | ☐ | ☐ | – |
| ☑ | 3 HKG-SIN | CX713 | J | 27OCT | 0855 | HK1 | | | – |

⊞ Show Advanced Options

○ By Passenger  ⊙ By PTC    Print Compare Fares                          |Update Fares|

Available Fares (Taxes and Fees included)

|  | PAX | Disc. | Fare Basis | Price (HKD) |
|---|---|---|---|---|
| ADT | | | | |
| ☑ | | ADT | JOW | 11,715.00 |
| Total (HKD) | | | | 11,715.00 |

900

☐ Pricing 1  ☑ Pricing 2  ☐ Pricing 3

|Add to Price Summary|

[Pricing 1][✓Pricing 2][Pricing 3]

| Confirm Price |

1 TEST/Mr

Sectors        1 2
Fare Basis     F2RTCX
Price    HKD    103,233.00
                        Delete

Total    HKD    103,233.00

○ Home    ○ New PNR 1

Fig. 9

EP 2 595 107 A1

EP 2 595 107 A1

File  Calculate & Convert  Tools

Create New:  PNR  Group PNR  |Search ● PNR ○ Member [                    ] |Retrieve|   1ATEST001  Office ID: HKGCX0300  Logout

New PNR 1 \ Flight Search \ Pricing \ TST \ E-Ticket \ TSM \ EMD \        | Delay PNR | | Place on Queue | | End of Transaction | ⊠

1000

| Lowest Price | All Prices | Advanced Pricing |

Pricing Options                                    View: TST Summary  FOP Summary

| ☑ | Passengers | PTC |
|---|---|---|
| ☑ | ☐ TEST/Mr | ⊞ ADT |

| ☐ | Sectors | Flight | Class | Date | Dep.Time | Status | Stopover | Fare Brk Pt | Married |
|---|---|---|---|---|---|---|---|---|---|
| ☐ | 1 HKG-LHR | CX255 | F | 08OCT | 0035 | HK1 | ☐ | ☐ | – |
| ☐ | 2 LHR-HKG | CX252 | F | 21OCT | 1235 | HK1 | ☐ | ☐ | – |
| ☑ | 3 HKG-SIN | CX713 | J | 27OCT | 0855 | HK1 | | | – |

⊞ Show Advanced Options

○ By Passenger ● By PTC   Print Compare Fares                       | Update Fares |

Available Fares (Taxes and Fees included)
    PAX    Disc.    Fare Basis    Price (HKD)
ADT
☑        ADT    JOW    11,715.00

Total (HKD)            11,715.00

☐ Pricing 1  ☑ Pricing 2  ☐ Pricing 3
| Add to Price Summary |

| Pricing 1 | ✓ Pricing 2 | Pricing 3 |

| Confirm Price |

1 /TEST/Mr

Sectors    1 2
Fare Basis    F2RTCX
Price    HKD    103,233.00
                  Delete

Sectors    3
Fare Basis    JOW
Price    HKD    11,715.00
                  Delete

Sub-total  HKD  114,948.00

Total  HKD  114,948.00

| ○ Home | ○ New PNR 1 |

Fig. 10

| Pricing 1 | Pricing 2 | Pricing 3 |
|---|---|---|

Confirm Price

1 TEST/Mr

Sectors          1  2  3
Fare Basis    FRT+JOW
Price    HKD    132,788.00
                          Delete

Total  HKD    132,788.00

**Vs**

| Pricing 1 | ✓Pricing 2 | Pricing 3 |
|---|---|---|

Confirm Price

1 TEST/Mr

Sectors          1  2
Fare Basis    F2RTCX
Price    HKD    103,233.00
                          Delete

Sectors          3
Fare Basis    JOW
Price    HKD    11,715.00
                          Delete

Sub-total  HKD  114,948.00

Total  HKD    114,948.00

*Fig. 11*

EP 2 595 107 A1

| Pricing 1 | ✓Pricing 2 | Pricing 3 |
|---|---|---|

1200

┌─────────────────────────┐
│      Confirm Price      │
└─────────────────────────┘

1 TEST/Mr

Sectors          1  2
Fare Basis    F2RTCX
Price    HKD    103,233.00
                    Delete

Sectors          3
Fare Basis    JOW
Price    HKD    11,715.00
                    Delete

Sub-total HKD  114,948.00

Total    HKD    114,948.00

*Fig. 12*

EP 2 595 107 A1

| Pricing 1 | ✓Pricing 2 | Pricing 3 |

< Confirm Price >

1 TEST/Mr

Sectors        1  2
Fare Basis     F2RTCX
Price     HKD     103,233.00
                    Delete

Sectors        3
Fare Basis     JOW
Price     HKD     11,715.00
                    Delete

Sub-total  HKD  114,948.00

Total     HKD  114,948.00

1300

Pricing proposals navigation. Pricing Proposal 2 is active, with its total price.

Pricing proposal 2 confirmation, will redo all — 1306 informative pricing as confirmed transactions. It will create the corresponding pricing record

Informative Pricing made for passenger 1 — 1302 with it's subtotal

Informative Pricing for Passenger 1 and segments 2 and 3. Selected fare "F2RTCX" for HKD 103,233. Possibility to delete this fare from the Pricing proposal 2

1304

*Fig. 13*

File  Calculate & Convert  Tools

Create New: | PNR  Group PNR | Search ⦿ PNR ○ Member [                    ] | Retrieve |         1ATEST001  Office ID: HKGCX0300  Logout

New PNR 1 \ Flight Search \ Pricing \ TST \ E-Ticket \ TSM \ EMD \        | Delay PNR | Place on Queue | End of Transaction | ⊠

⊗ The following errors occured

■ Overlap between some to be prices detected. (17911)

| Lowest Price | All Prices | Advanced Pricing |

Pricing Options                                    View: TST Summary  FOP Summary

| ☑ | Passengers | PTC |
|---|---|---|
| ☑ | ☐ TEST/Mr | ⊞ ADT |

| ☐ | Sectors | Flight | Class | Date | Dep.Time | Status | Stopover | Fare Brk Pt | Married |
|---|---|---|---|---|---|---|---|---|---|
| ☐ | 1 HKG-LHR | CX255 | F | 08OCT | 0035 | HK1 | ☐ | ☐ | – |
| ☐ | 2 LHR-HKG | CX252 | F | 21OCT | 1235 | HK1 | ☐ | ☐ | – |
| ☑ | 3 HKG-SIN | CX713 | J | 27OCT | 0855 | HK1 | | | – |

⊞ Show Advanced Options

| Update Fares |

○ By Passenger  ⦿ By PTC    Print Compare Fares

Available Fares (Taxes and Fees included)
        PAX    Disc.    Fare Basis    Price (HKD)
ADT
☑              ADT      JOW           132,788.00

⊠ Pricing 1 | Pricing 2 | Pricing 3

| Confirm Price |

1 TEST/Mr

Sectors        1 2 3
Fare Basis    FRT+JOW
Price    HKD    132,788.00
                        Delete

Total    HKD    132,788.00

○ Home | ○ New PNR 1

EP 2 595 107 A1

*Fig. 14*

Europäisches
Patentamt

European
Patent Office

Office européen
des brevets

## EUROPEAN SEARCH REPORT

Application Number

EP 11 30 6492

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claimed subject matter, with due regard to the description and drawings, relates inter alia to processes comprised in the list of subject matter and activities excluded from patentability under Art. 52(2) and (3) EPC. The Applicant is advised that in accordance with the established practice of the EPO no search need be performed in respect of those aspects of the invention. The only identifiable technical aspects of the claimed invention relate to the use of conventional, general purpose data processing technology for processing data of an inherently non-technical nature. The information technology employed is considered to have been generally known as it was widely available to everyone at the date of filing/priority of the present application. The notoriety of such prior art cannot reasonably be contested. Accordingly, no documentary evidence is considered required, as the technical aspects identified in the present application (Art. 92 EPC) are considered part of the common general knowledge. For further details see the Notice from the European Patent Office dated 1 October 2007 (OJ 11/2007; p592-593) and the accompanying opinion.<br>----- | 1-17 | INV.<br>G06Q30/00<br>G06Q10/00<br><br><br><br>TECHNICAL FIELDS SEARCHED (IPC)<br><br>G06Q |

The present search report has been drawn up for all claims

| Place of search | Date of completion of the search | Examiner |
|---|---|---|
| Munich | 10 January 2012 | Falò, Luca |